# EUROPÄISCHE PATENTSCHRIFT

(11) **EP 0 387 669 B1**
(45) Veröffentlichungstag und Bekanntmachung des Hinweises auf die Patenterteilung: **23.06.1993**
(21) Anmeldenummer: 90104299.4
(22) Anmeldetag: 07.03.1990
(51) Int. Cl.: A21C 11/12

(54) **Vorrichtung zur Herstellung von Schnittbrötchen**
Device for producing slit rolls
Appareil pour la production de petits pains incisés

(30) Priorität: 14.03.1989 DE 3908212
(43) Veröffentlichungstag der Anmeldung: 19.09.1990
(73) Patentinhaber: Neuenkirchener Eisengiesserei und Maschinenfabrik Emil Kemper GmbH, D-33397 Rietberg (DE)
(72) Erfinder: Kemper, Kate, CH-2800 Delemont (CH)
(74) Vertreter: Linser, Heinz

(56) Entgegenhaltungen:
- DE-A- 3 320 114
- DE-B- 1 131 165
- DE-B- 1 220 803
- DE-C- 316 899

## Beschreibung

Die Erfindung betrifft eine Vorrichtung zur Herstellung von Schnittbrötchen und Formgebäck mit Hilfe eines auf einem Werkzeugträger vertikal beweglich angeordneten, ein Messer aufweisenden Werkzeugs und einer Zufuhrvorrichtung für die zu bearbeitenden Teigteile mit Teigteil-Trägerelementen, welche zur Aufnahme der Teigteile muldenförmige Ausnehmungen aufweisen.

Zur Herstellung von Kleinbroten, wie etwa eingeschlagene Brötchen oder Schrippen (Semmeln), sind kombinierte Teigteilund Rundwirkvorrichtungen bekannt, denen eine Teigmasse zugeführt wird, welche die rundgewirkten Teigstücke an ein Spreizförderband abgeben, dem sich eine Auswalzstation mit einer Einschlagvorrichtung anschließt, oder welche die Teigstücke direkt zur Beschickung bringt. Die sogenannten eingeschlagenen Brötchen, Schrippen oder Semmeln können unmittelbar nach dem Rundwirken ihre endgültige Form erhalten, da eine sogenannte Zwischengare nicht erforderlich ist.

Für die Herstellung von Formgebäck, wie beispielsweise gedrückten Schrippen und gestüpfelter Teigware, wie Kaiser-, Stern-, Kreuzsemmeln und Eierwecken, kann die Formung der Rundstücke aus backtechnischen Gründen erst nach einer Zwischengare erfolgen, da das Teigstück sich entspannen muß.

Für die Aufarbeitung bzw. Herstellung von Formgebäck sind bereits Anlagen bekannt, die mit einer Teigteil- und Wirkmaschine und einer Zwischengäranlage ausgerüstet sind. Eine solche Anlage geht beispielsweise aus der DE-OS 23 46 577 hervor.

Aus der DE-A 33 20 114 geht ferner eine Anlage zur kontinuierlichen und automatischen Aufbereitung von Schnittbrötchen und auch Formgebäck hervor, welche mit einer Schneidestation ausgerüstet ist. Damit läßt sich eine bestimmte Gebäckart, nämlich Brötchen, Schrippen oder Semmeln in einer länglichen Formgebung herstellen. Dementsprechend sind die Teigteil-Zuführelemente als Schalen ausgebildet, welche von den Teigteilen voll ausgefüllt werden, so daß unter Mitwirkung von Niederdrückelementen die Bearbeitung durch ein Schnittmesser erfolgen kann, ohne daß die Teigteile in der Schale wesentlich verformt werden.

Zur Herstellung von Schnittbrötchen im Handbetrieb werden die rundgewirkten Teigstücke nach einer kurzen Zwischengare langgewirkt oder langgerollt und der Stückgare überlassen. Nach belauf der halben Stückgare werden sie auf der Oberfläche mit einem scharfen Messer von Hand in länglicher Richtung eingeschnitten. Der Einschnitt wird unmittelbar danach durch einen leichten Druck von den Seiten her wieder geschlossen und die Teigstücke werden sodann gewendet, derart, daß der Schnitt nach unten zu liegen kommt. Bei etwas knapper Stückgare werden die Teigstücke mit dem Schnitt nach oben in den Ofen geschoben.

Es ist, wie oben dargelegt wurde, bekannt, den Schneidvorgang zu automatisieren und es sind auch Vorrichtungen bekannt, bei denen die mechanisch angetriebenen Messer mit Niederdrückelementen zusammenwirken, so daß das Teigstück beim Herausführen des Messers in seinem Teigteil-Transportelement zurückgehalten wird. Hierbei reißt jedoch oftmals die mit dem Messer gerade erzeugte Schnittnaht auf, oder das Teigstück trocknet im Bereich der Schnittnaht aus, so daß das Endprodukt nicht demjenigen entspricht, welches von Hand hergestellt wird. Hierzu ist es erforderlich, die Schnittnaht unmittelbar nach Durchführung des Schnittes wieder zu schließen, indem die beiden Schnitthälften gegeneinander gedrückt werden. Gleichzeitig muß aber das Teigteil beim Herausziehen des Messers niedergehalten werden.

Der Erfindung liegt die Aufgabe zugrunde, eine Vorrichtung zu schaffen, mit der der automatisch durchgeführte Schnitt in ein Teigteil beim Herausziehen des Messers sorgfältig und in einer die Oberfläche des Teigstückes schonenden Art, geschlossen werden kann, ähnlich wie bei einem von Hand durchgeführten Verfahren, wobei gleichzeitig beim Herausziehen des Messers aus dem Teigstück eine Niederhaltefunktion ausgeübt wird.

Diese Aufgabe wird dadurch gelöst, daß das Messer in einem Kurvenkörper integriert ist, welcher auf beiden Seiten zur Bewegungsachse des Messers Führungs- und Rollflächen für an jeweils einem Gelenkarm schwenkbar befestigte Rollkörper aufweist und jeder Gelenkarm eines Rollkörpers mittels einer im Kurvenkörper über dem Messer angeordneten Achse schwenkbar gelagert ist, welche in Relation zum Messer vertikal beweglich ausgebildet ist. Diese Rollkörper üben während des Arbeitsvorganges eine Niederhaltefunktion aus und bewirken gleichzeitig ein Zusammendrücken des kurz zuvor erzeugten Einschnittes.

Der Werkzeugträger ist in vorteilhafter Weise mittels Gleithülsen auf einem Führungsgestänge angeordnet, welches zu den Teigteilträgerelementen relativ bewegbar ist. Dadurch kann der gewünschte kinematische Arbeitsablauf erfolgen.

Das Führungsgestänge weist an seinen unteren Enden Begrenzungsstücke auf, welche im Arbeitszustand des Werkzeugs bei der Durchführung des Schneidvorganges auf dem Teigteil-Trägerelement aufliegen. Auf diese Weise besteht während des Arbeitsprozesses zwischen dem Schneidwerkzeug und dem Teigteil-Trägerelement eine relativ feste Verbindung.

Die Gleithülsen sind vorteilhaft auf dem Führungsgestänge mittels Spiraldruckfedern abgefedert. Dadurch kann der Arbeitsprozeß durch eine Auf- und Abwärtsbewegung des Messers erfolgen, während das Führungsgestänge mit seinen Begrenzungsstücken auf dem Teigteil-Trägerelement aufliegt.

Zwischen den von der Achse ausgehenden Gelenkarmen ist eine Zugfeder angeordnet. Auf die Rollkörper wird daher stets eine zur Messerebene gerichtete Kraft ausgeübt. Bei ausreichenden Gewichten der Gelenkarme kann die Zugfeder auch entfallen.

Der Werkzeugträger ist als Messerträger ausgebildet, welcher sich über die gesamte Vorrichtung erstreckt. Es können somit in einem Arbeitsgang mehrere parallel zueinander liegende Teigreihen gleichzeitig bearbeitet werden.

Die Rollkörper sind aus Rollen ausgebildet und bestehen aus einem weichen Kunststoff- oder Naturmaterial, wie beispielsweise Filz oder Naturfilz. Das Messer besteht aus zwei in seiner Schnittebene gegeneinander verschiebbare Messerklingen, welche mit einem Wellenschliff versehen sind.

Ein Ausführungsbeispiel der Erfindung ist in der Zeichnung dargestellt und wird nachstehend näher erläutert.

Hierbei zeigen:
- FIGUR 1: Eine schematische Darstellung der Vorrichtung in Frontansicht mit ihrem Messer in Einsatzposition;
- FIGUR 2: die Darstellung nach Figur 1 in zurückgezogener Position des Messers mit einem Teigteil-Trägerelement in freier Transportstellung, und

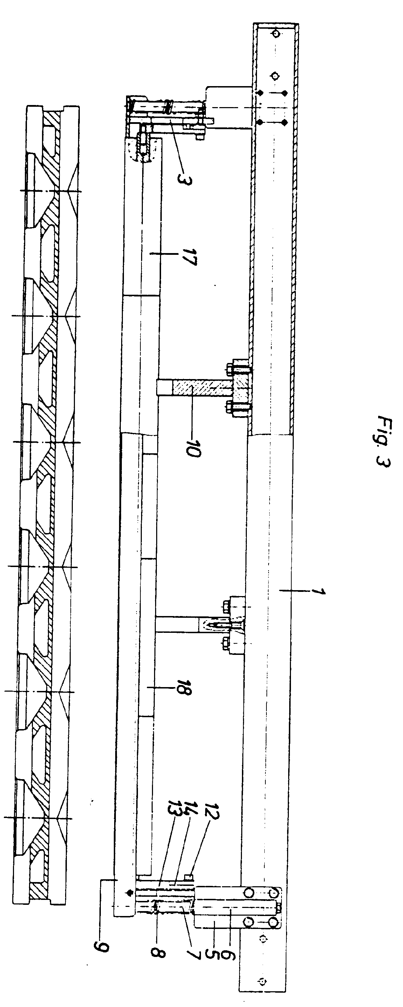

- FIGUR 3: die Vorrichtung in verkleinerter Darstellung und in Seitenansicht.

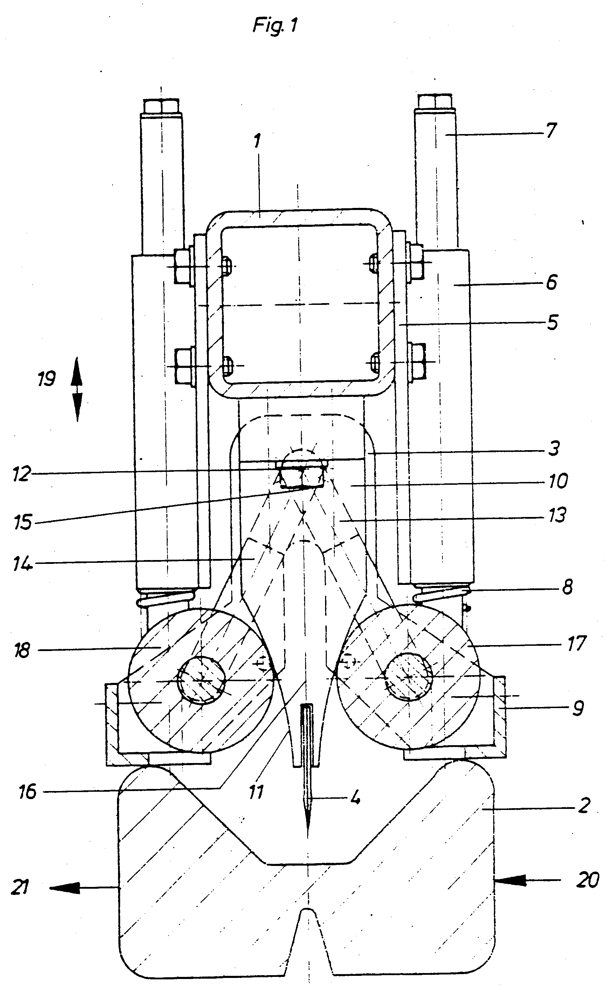

In Figur 1 ist die Vorrichtung zur Herstellung von Schnittbrötchen und Formgebäck dargestellt, welche Bestandteil beispielsweise einer Brötchenanlage ist, die hier nicht näher dargestellt ist. Die Brötchenanlage ist mit einer Teigteil-Transportvorrichtung versehen, welche zwischen Kettengliedern befestigte Teigteil-Trägerelemente 2 aufweist. Diese durchfahren eine Schnittstation, welche aus der Vorrichtung gebildet ist und mit dieser zusammenwirken.

An einem Werkzeugträger 1, der vertikal beweglich angeordnet ist, befindet sich eine damit fest verbundene Messervorrichtung 3 mit ihren Messern 4. An den vertikalen Seitenflächen des Werkzeugträgers 1 sind Flanschelemente 5 angeschraubt, mit denen Gleithülsen 6 verbunden sind. Die Gleithülsen 6 sind auf einem Führungsgestänge 7 gleitbar angeordnet und durch Druckfedern 8 gegenüber einem unteren Begrenzungsstück 9 abgefedert.

Die Messervorrichtung 3 besteht aus einem Kurvenkörper 10, welcher in seinem unteren Teil auf beiden Seiten des Messers 4 zueinander symmetrisch ausgebildete Führungs- und Rollflächen 11 aufweist, welche in Richtung des Messers 4 asymtotisch verlaufen.

Im oberen Teil des Kurvenkörpers 10 befindet sich eine zum Werkzeugträger 1 parallel verlaufende Achse 12, an der Gelenkarme 13 und 14 schwenkbar befestigt sind. Eine Zugfeder 15 ist mit ihren Enden am Gelenkarm 13 und entsprechend am Gelenkarm 14 befestigt, so daß auf die Gelenkarme eine Zugkraft in Richtung der Messerebene 16 ausgeübt wird.

Am Ende eines jeden Gelenkarmes 13, 14 ist jeweils ein Rollkörper 17, 18 drehbar befestigt. Diese Rollkörper 17, 18 bestehen aus einem weichen Kunststoff- oder Naturmaterial, wie beispielsweise Filz oder Naturfilz.

Die Achse 12, mit der die Gelenkarme 13 und 14 schwenkbar befestigt sind, bildet mit der Messervorrichtung 3 und den Begrenzungsstücken 9 eine Einheit, so daß zwischen dieser Achse 12 mit den Gelenkarmen 13 und 14 und den am Ende befestigten Rollkörpern 17 und 18 und dem Kurvenkörper 10 eine Relativbewegung möglich ist und die Rollkörper 17 und 18 auf den Führungs- und Rollflächen 11 abrollen können, wie anhand der Funktionsbeschreibung näher erläutert wird.

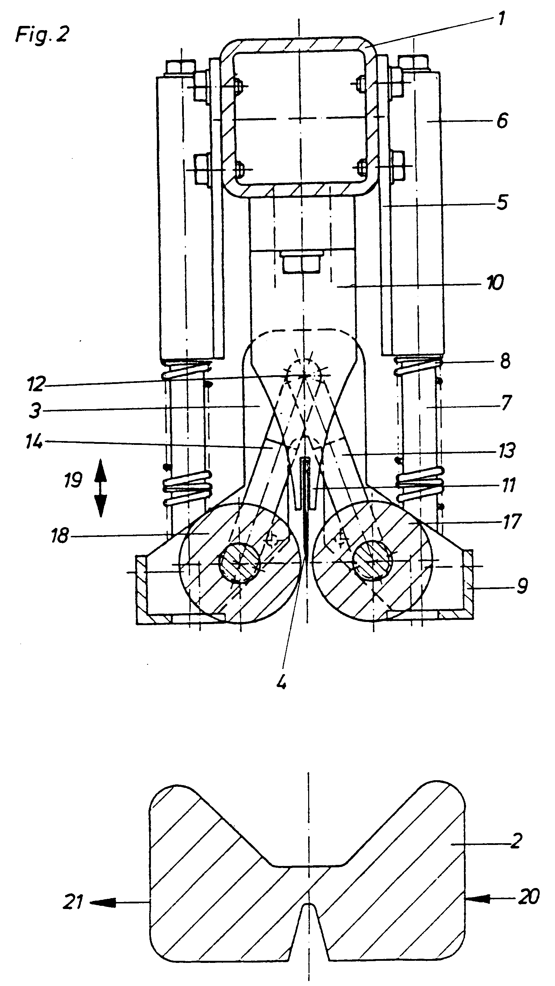

Das Messer 4 besteht aus zwei parallel und eng aneinanderliegenden und spiegelbildlich ausgebildeten Schneiden, welche senkrecht zur Zeichenebene der Figuren 1 und 2 gegeneinander beweglich sind. Ihre Schneiden sind jeweils mit einem Wellschliff versehen.

Das Teigteil-Trägerelement 2 ist zur Aufnahme eines nicht näher dargestellten Teigteiles muldenförmig ausgebildet.

Die Figur 2 zeigt die Schneidevorrichtung mit einem eingefahrenen Messer 4, wobei die gesamte Schneideeinrichtung von dem Teigteil-Trägerelement 2 entsprechend entfernt ist. Die Schneideeinrichtung ist zum Teigteil-Trägerelement 2 auf- und abfahrbar, wie durch den Doppelpfeil 19 angedeutet ist, während sich das Trägerelement 2 in Richtung der Pfeile 20 und 21 bewegt.

Befindet sich das schrittweise bewegbare Teigteil-Trägerelement 2 unter der Schneidevorrichtung, so wird diese insgesamt abgesenkt, bis die Begrenzungsstücke 9 gegen das Teigteil-Trägerelement 2 stoßen. Zu diesem Zeitpunkt befindet sich die Achse 12 mit der Messervorrichtung 3 in ihrer unteren Position. Der Werkzeugträger 1 setzt seine Abwärtsbewegung nunmehr gegen die Kraft der Druckfedern 8 fort, wodurch das Messer 4 in das in der Mulde des Teigteil-Trägerelementes 2 befindliche (nicht dargestellte) Teigstück eindringt, während die Rollkörper 17 und 18 durch die Begrenzungsstücke 9 daran gehindert werden der Abwärtsbewegung zu folgen. Die Feder 15 und/oder die Schwerkraft bewirken auf die Gelenkarme 13 und 14 eine Kraft, wodurch die Rollkörper 17 und 18 auf die Führungs-und Rollflächen 11 gepreßt werden und damit eine Abrollbewegung vollführen, wodurch diese gemäß der Raumform der Führungs- und Rollflächen 11 eine Bewegung nach außen durchführen. Hierdurch kann das Messer 4 in das Teigstück eindringen, ohne daß es durch die Rollkörper 17 und 18 daran gehindert wird. Bei diesem Bewegungsvorgang des Messers 4 nach unten führt der Rollkörper 18 eine Bewegung im Uhrzeigersinn und der Rollkörper 17 eine Bewegung gegen den Uhrzeigersinn aus. Bei der sich anschließenden Bewegung des Messers 4 nach oben sind die Drehbewegungen entsprechend umgekehrt.

Der Werkzeugträger 1 führt, nachdem das Messer 4 seine tiefste Schnittposition im Teigteil erreicht hat, eine entgegengesetzte Bewegung aus. Hierbei halten die Druckfedern 8 die Begrenzungsstücke 9 gegen das Teigteil-Trägerelement 2 gepreßt und die zu diesem Zeitpunkt ihre äußerste Position einnehmenden Rollkörper 17 und 18 rollen von beiden Seiten zum Messer 4 über das Teigstück in Richtung zur Schnittnaht. Hierbei üben sie auf das Teigstück sowohl eine Druckkraft nach unten und gleichzeitig in Richtung der Schnittnaht aus. Das Teigstück wird somit während des Herausziehens des Messers 4 sanft niedergedrückt und gleichzeitig wirkt eine Druckkomponente in Richtung der Schnittstelle. Durch die Aberollbewegung über das Teigstück wird jedoch nicht nur eine Druckkraft auf die Schnittstelle an der Oberfläche des Teigstückes ausgeübt, sondern eine in die Tiefe des Teigstückes reichende Kraft.

### LISTE DER ELEMENTE

(numerisch sortiert)
- 1: Werkzeugträger
- 2: Teigteil-Trägerelement
- 3: Messervorrichtung
- 4: Messer
- 5: Flanschelement
- 6: Gleithülsen
- 7: Führungsgestänge
- 8: Spiraldruckfedern
- 9: Begrenzungsstücke
- 10: Kurvenkörper
- 11: Führungs- und Rollflächen
- 12: Achse
- 13: Gelenkarm
- 14: Gelenkarm
- 15: Zugfeder
- 16: Messerebene
- 17: Rollkörper
- 18: Rollkörper
- 19: Doppelpfeil
- 20: Bewegungspfeil
- 21: Bewegungspfeil

## Patentansprüche

1. Vorrichtung zur Herstellung von Schnittbrötchen und Formgebäck mit Hilfe eines auf einem Werkzeugträger (1) vertikal beweglich angeordneten, ein Messer (4) aufweisenden Werkzeugs und einer Zufuhrvorrichtung für die zu bearbeitenden Teigteile mit Teigteil-Trägerelementen (2), welche zur Aufnahme der Teigteile muldenförmige Ausnehmungen aufweisen, **dadurch gekennzeichnet, daß** das Messer (4) in einem Kurvenkörper (10) integriert ist, welcher auf beiden Seiten zur Bewegungsachse des Messers (4) Führungs- und Rollflächen (11) für an jeweils einem Gelenkarm (13,14) schwenkbar befestigte Rollkörper (17,18) aufweist und daß jeder Gelenkarm (13, 14) eines Rollkörpers (17, 18) mittels einer im Kurvenkörper (10) über dem Messer (4) angeordneten Achse (12) schwenkbar gelagert ist, welche in Relation zum Messer (4) vertikal beweglich ausgebildet ist.

2. Vorrichtung nach Anspruch 1, **dadurch gekennzeichnet, daß** der Werkzeugträger (1) mittels Gleithülsen (6) auf einem Führungsgestänge (7) angeordnet ist, welches zu den Teigteilträgerelementen (2) relativ bewegbar angeordnet ist.

3. Vorrichtung nach Anspruch 2, **dadurch gekennzeichnet, daß** das Führungsgestänge (7) an seinen unteren Enden Begrenzungsstücke (9) aufweist, welche im Arbeitszustand des Werkzeugs bei der Durchführung des Schneidvorganges auf dem Teigteil-Trägerelement (2) aufliegen.

4. Vorrichtung nach Anspruch, 2 oder 3, **dadurch gekennzeichnet, daß** die Gleithülsen (6) auf dem Führungsgestänge (7) mittels Spiraldruckfedern (8) abgefedert sind.

5. Vorrichtung nach einem der voranstehenden Ansprüche, **dadurch gekennzeichnet, daß** zwischen den von der Achse (12) ausgehenden Gelenkarmen (13,14) eine Zugfeder (15) angeordnet ist.

6. Vorrichtung nach einem der voranstehenden Ansprüche, **dadurch gekennzeichnet, daß** der Werkzeugträger (1) als Messerträger ausgebildet ist, welcher sich über die gesamte Vorrichtung erstreckt.

7. Vorrichtung nach einem der voranstehenden Ansprüche, **dadurch gekennzeichnet, daß** die Rollkörper (17,18) als Rollen ausgebildet sind und aus einem weichen Kunststoffoder Naturmaterial, wie beispielsweise Filz oder Naturfilz bestehen.

8. Vorrichtung nach einem der voranstehenden Ansprüche, **dadurch gekennzeichnet, daß** das Messer (4) aus zwei in ihrer Schnittebene gegeneinander verschiebbaren Messerklingen besteht, welche mit einem Wellenschliff versehen sind.

## Claims

1. Equipment for making cut rolls and kneaded pastries with the help of a tool with a cutting blade (4), vertically movable on a tool carrier (1), and a feeding mechanism for the batches of dough to be kneaded, with components (2) for carrying the dough, which components have trough-shaped depressions for receiving the batches of dough, characterised in that the cutting blade (4) is integral with a curved body (10) which has on both sides of the axis of rotation of the cutting blade (4) guiding and rolling surfaces (11) for rollers (17, 18), each roller being mounted for rotation on a pivotal arm (13, 14), and in that each pivotal arm (13, 14) of a roller (17, 18) is pivotally supported by an axle (12) located in the curved body (10) above the cutting blade (4), which axle is vertically movable with respect to the cutting blade (4).

2. Equipment according to Claim 1, characterised in that the tool carrier (1) is mounted on guide rails (7) by means of sliding sleeves (6), which rails are movable relatively to the components (2) for carrying the batches of dough.

3. Equipment according to Claim 2, characterised in that the guide rails (7) have at their lower ends flanking pieces (9) which, when the tool is in operation and cutting, rest upon the component (2) for carrying the batches of dough.

4. Equipment according to Claim 2 or 3, characterised in that the sliding sleeves (6) on the guide rails (7) are cushioned against pressure by means of coil springs (8).

5. Equipment according to one of the preceding Claims, characterised in that a tension spring (15) is provided between the pivotal arms (13, 14) which extend from the axle (12).

6. Equipment according to one of the preceding Claims, characterised in that the tool carrier (1) is designed as a cutting blade carrier which extends over the entire mechanism.

7. Equipment according to one of the preceding Claims, characterised in that the rollers (17, 18) are designed as runners and are made of a soft synthetic or natural material such as felt or natural felt.

8. Equipment according to one of the preceding Claims, characterised in that the cutting blade (4) consists of two knife blades which can be displaced towards each other in their sectional plane, and which are provided with an uneven cutting surface.

## Revendications

1. Dispositif de fabrication de petits pains et de gâteaux mis en forme à l'aide d'un outil présentant un couteau (4), disposé à déplacement vertical sur un porte-outil (1) et d'un dispositif d'amenée des morceaux de pâte à travailler, avec éléments porteurs (2) des morceaux de pâte et présentant des découpes en forme de cuvettes servant à reprendre les morceaux de pâte, caractérisé en ce que le couteau (4) est intégré dans un corps courbe (10) qui présente de part et d'autre de l'axe de déplacement du couteau (4) des surfaces de guidage et de roulement (11) pour des corps de roulement (17, 18) fixés chacun à pivotement sur un bras articulé (13, 14), et en ce que chaque bras articulé (13, 14) d'un corps de roulement (17, 18) est maintenu à pivotement à l'aide d'un axe (12) disposé dans le corps courbe (10) au-dessus du couteau (4), et réalisé de manière à pouvoir être déplacé verticalement par rapport au couteau (4).

2. Dispositif selon la revendication 1, caractérisé en ce que le porte-outil (1) est installé à l'aide de manchon de glissement (6) sur un barreau de guidage (7) qui est installé de manière à pouvoir se déplacer par rapport aux éléments porteurs (2) des morceaux de pâte.

3. Dispositif selon la revendication 2, caractérisé en ce que le barreau de guidage (7) présente à son extrémité inférieure des pièces de contact (9) qui, lorsque l'outil est en état de fonctionnement, reposent sur l'élément porteur (2) des morceaux de pâte pendant l'opération de découpe.

4. Dispositif selon la revendication 2 ou 3, caractérisé en ce que les manchons de glissement (6) sont repoussés sur le barreau de guidage (7) à l'aide de ressorts hélicoïdaux de compression (8).

5. Dispositif selon l'une des revendications précédentes, caractérisé en ce qu'un ressort de traction (15) est installé entre les bras articulés (13, 14) issus de l'axe (12).

6. Dispositif selon l'une des revendications précédentes, caractérisé en ce que le porte-outil (1) présente la forme d'un porte-couteau qui s'étend à travers l'ensemble du dispositif.

7. Dispositif selon l'une des revendications précédentes, caractérisé en ce que les corps de roulement (17, 18) se présentent sous la forme de rouleau et sont réalisés en matière synthétique ou naturelle molle, comme par exemple du feutre ou du feutre naturel.

8. Dispositif selon l'une des revendications précédentes, caractérisé en ce que le couteau (4) est constitué de deux lames de couteau mobiles l'une par rapport à l'autre dans leur plan de coupe et dotées d'un dispositif d'affûtage.
